**Europäisches Patentamt**

**European Patent Office**

**Office européen des brevets**

(19)

(11) Veröffentlichungsnummer : **0 379 748 B1**

# (12) EUROPÄISCHE PATENTSCHRIFT

(45) Veröffentlichungstag der Patentschrift :
**17.03.93 Patentblatt 93/11**

(51) Int. Cl.⁵ : **G01T 1/29**

(21) Anmeldenummer : **89203130.3**

(22) Anmeldetag : **11.12.89**

(54) **Verfahren zur Erzeugung einer Röntgenaufnahme mittels eines Photoleiters und Anordnung zur Durchführung des Verfahrens.**

(30) Priorität : **17.12.88 DE 3842525**

(43) Veröffentlichungstag der Anmeldung :
**01.08.90 Patentblatt 90/31**

(45) Bekanntmachung des Hinweises auf die
Patenterteilung :
**17.03.93 Patentblatt 93/11**

(84) Benannte Vertragsstaaten :
**DE FR GB**

(56) Entgegenhaltungen :
**EP-A- 0 219 897
US-A- 4 408 871
US-A- 4 511 240**

(73) Patentinhaber : **Philips Patentverwaltung
GmbH
Wendenstrasse 35 Postfach 10 51 49
W-2000 Hamburg 1 (DE)**
(84) **DE**

Patentinhaber : **N.V. Philips'
Gloeilampenfabrieken
Groenewoudseweg 1
NL-5621 BA Eindhoven (NL)**
(84) **FR GB**

(72) Erfinder : **Hillen, Walter, Dr.
Dinkermichsweg 38
W-5100 Aachen (DE)**
Erfinder : **Rupp, Stephan
Bertholdstrasse 16
W-5190 Stolberg-Breinig (DE)**
Erfinder : **Schiebel, Ulrich, Dr.
Zehntweg 60
W-5100 Aachen (DE)**
Erfinder : **Schäfer, Ingo, Dr.
Günzweg 1
W-2000 Hamburg 65 (DE)**

(74) Vertreter : **Hartmann, Heinrich, Dipl.-Ing. et al
Philips Patentverwaltung GmbH
Wendenstrasse 35 Postfach 10 51 49
W-2000 Hamburg 1 (DE)**

**EP 0 379 748 B1**

Jouve, 18, rue Saint-Denis, 75001 PARIS

**Beschreibung**

Verfahren zur Erzeugung einer Röntgenaufnahme mittels eines Photoleiters und Anordnung zur Durchführung des Verfahrens

Die Erfindung betrifft ein Verfahren zum Erzeugen einer Röntgenaufnahme mittels eines Röntgenstrahlung in ein Ladungsmuster umsetzenden Photoleiters, der vor der Röntgenaufnahme örtlich gleichmäßig aufgeladen, der durch die Aufnahme in Abhängigkeit von der Intensität der Röntgenstrahlung entladen wird und dessen Oberfläche nach der Aufnahme zur Erfassung der Ladungsdichte abgetastet wird, wobei für jeden Bildpunkt ein der Entladung an dem Bildpunkt entsprechender Bildwert gebildet wird. Ein solches Verfahren und eine solche Anordnung sind in der DE-OS 35 34 768 beschrieben.

Es hat sich gezeigt, daß diese Bildwerte allerdings nicht nur durch die während der Röntgenaufnahme erfolgte Bestrahlung bestimmt sind, sondern auch durch eine Selbstentladung, die von der Bestrahlung des Photoleiters abhängt. Da nicht alle Bildpunkte in gleichem Maße entladen werden, ergeben sich durch diese Selbstentladung Artefakte in der Röntgenaufnahme. Aufgabe der Erfindung ist es, diese Artefakte zumindest zu verringern.

Ein erster Effekt, der zu derartigen Artefakten führt, ist der sogenannte Memory-Effekt. Dieser äußert sich darin, daß bei zwei zeitlich dicht aufeinanderfolgenden Röntgenaufnahmen in der zweiten Aufnahme Bereiche sichtbar werden, die bei der vorangehenden Aufnahme von besonders starker Strahlung (Direktstrahlung) getroffen wurden ("Geisterbilder").

Die Auswirkungen dieses Memory-Effekts lassen sich erfindungsgemäß dadurch verringern bzw. beseitigen, daß aus der seit der vorangegangenen Aufnahme bis zum Ende der Aufladung bzw. bis zum Auslesen verstrichenen Zeit, aus der charakteristischen Entladungsfunktion des Photoleiters und aus einem von der Dosis an dem betreffenden Bildpunkt bei der vorangehenden Aufnahme abhängigen Amplitudenfaktor die Selbstentladung in jedem Bildpunkt bestimmt und der zugehörige Bildwert entsprechend korrigiert wird.

Dabei wird als charakteristische Entladungsfunktion f(t) des Photoleiters der zeitliche Verlauf der Entladung des Photoleiters bei einer beliebig vorgebbaren Dosis bezeichnet. Die Erfindung basiert nämlich auf der Erkenntnis, daß sich die Selbstentladung eines bestimmten Photoleiters im Anschluß an eine Röntgenaufnahme als Produkt einer in allen Fällen gleichen Zeitfunktion - der charakteristischen Entladungsfunktion f(t) des Photoleiters - und eines von der Dosis bei der Röntgenaufnahme abhängigen Amplitudenfaktors darstellen läßt. Diese Entladung ist zunächst relativ stark und nimmt mit wachsendem zeitlichen Abstand von der Röntgenaufnahme immer weiter ab. Die Selbstentladung findet auch dann statt, wenn der Photoleiter nach der Aufnahme wieder aufgeladen wird. Solange die Aufladung anhält, ändert sich das Oberflächenpotential bzw. die Ladungsdichte auf dem Photoleiter aber nicht, weil die durch die Selbstentladung verschwindenden Ladungsträger fortlaufend durch den Aufladungsprozeß ersetzt werden. Nach mehr als drei Minuten führt die Selbstentladung kaum noch zu einer Änderung des Oberflächenpotentials; bei Röntgenaufnahmen, die in einem zeitlichen Abstand von mehr als drei Minuten angefertigt werden, macht sich der Memory-Effekt in der Regel also nicht mehr bemerkbar.

Ein zweiter Selbstentladungsprozeß findet im Anschluß an die eigentliche Röntgenaufnahme statt - unabhängig davon, ob zuvor schon eine andere Aufnahme erfolgt ist oder nicht. Das Ausmaß dieser Selbstentladung hängt von der Strahlendosis ab, von der die einzelnen Bildpunkte bei der Röntgenaufnahme getroffen werden und von dem Zeitraum, der von der Röntgenaufnahme bis zu dem Zeitpunkt verstreicht, zu dem die Ladungsdichte an dem betreffenden Bildpunkt abgetastet wird. Da diese Parameter in der Regel für die verschiedenen Bildpunkte unterschiedlich sind, ergeben sich daraus ebenfalls Artefakte, die erfindungsgemäß dadurch beseitigt werden können, daß zur Korrektur der durch die jeweilige Aufnahme bewirkten Entladung die Bildwerte um einen Betrag verringert werden, der den Bildwerten und der Zeitdifferenz zwischen dem Abtastzeitpunkt und einem Referenzzeitpunkt, vorzugsweise dem Zeitpunkt der Aufnahme, proportional ist.

An sich ist der Selbstentladungsprozeß im Anschluß an die Röntgenaufnahme der gleiche wie in zuvor in Verbindung mit dem Memory-Effekt beschrieben. Da die Röntgenstrahlung in den für die Diagnose wichtigen Bereichen aber relativ schwach ist, kann der nichtlineare Verlauf der charakteristischen Entladungsfunktion gut durch einen geradlinigen Verlauf angenähert werden kann. Zur Bestimmung der Selbstentladung im Anschluß an eine Aufnahme muß somit lediglich jeder Bildwert proportional zur Zeitdifferenz zwischen dem Abtastzeitpunkt und dem Aufnahmeende verringert werden.

Die Bestimmung der Parameter, die zur Korrektur der Auswirkungen des Memory-Effektes erforderlich sind, kann auf verschiedene Weise erfolgen:

Eine erste Weiterbildung der Erfindung sieht vor, daß der Amplitudenfaktor aus dem Bildwert der vorangegangenen Aufnahmen abgeleitet wird. Dies setzt voraus, daß der Zusammenhang zwischen Bildwert und Dosis, der bei größeren Dosen nichtlinear ist, bekannt ist.

Eine zweite Weiterbildung sieht demgegenüber vor, daß das durch eine Röntgenaufnahme erzeugte Entladungsbild zweimal abgetastet wird und daß der Amplitudenfaktor aus der Differenz der Bildwerte, bezogen auf die Differenz der charakteristischen Entladungsfunktion f(t) an den beiden Abtastzeitpunkten bestimmt wird. Aus der Änderung eines Bildwerts zwischen den beiden Abtastzeitpunkten läßt sich nämlich die Selbstentladung unmittelbar bestimmen.

Die Erfindung wird nachstehend anhand der Zeichnung näher erläutert. Es zeigen

Fig. 1 ein Röntgengerät, bei dem die Erfindung anwendbar ist,

Fig. 2 die charakteristische Entladungskurve eines Photoleiters,

Fig. 3 den Zusammenhang zwischen dem Bildwert und der Dosis bei einem Photoleiter,

Fig. 4 den zeitlichen Verlauf des Oberflächenpotentials bei einer durch den Memory-Effekt beeinflußten Röntgenaufnahme

Fig. 5 den zeitlichen Verlauf der Bildwerte bei Röntgenaufnahmen mit unterschiedlich starken Belichtungen und

Fig. 6 das Blockschaltbild einer Einheit, die die Bildwerte in der erfindungsgemäßen Weise auswerten kann.

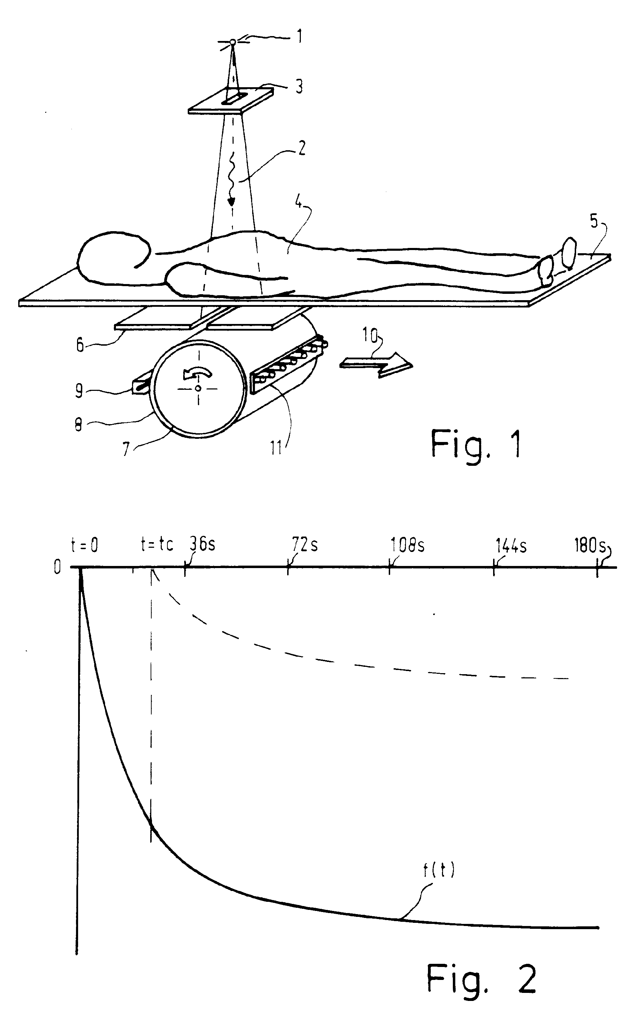

In Fig. 1 ist mit 1 schematisch ein Röntgenstrahler angedeutet, der ein Strahlenbündel 2 emittiert, das durch eine mit einem Schlitz versehene Blendenplatte 3 zu einem ebenen Strahlenfächer umgeformt wird und einen Patienten 4 durchsetzt, der auf einem Patientenlagerungstisch 5 liegt. Jenseits des Tisches 5 durchsetzt das Strahlenbündel 2 eine weitere Blende 6 und gelangt auf einen Bildaufnehmer, der einen zylinderförmigen Träger 7 umfaßt, auf dessen Oberfläche eine Photoleiterschicht 8, vorzugsweise aus Selen, aufgebracht ist. Der elektrisch leitende Träger 7 ist an eine negative Gleichspannung angeschlossen, z.B. an -1.500 V.

Vor Beginn einer Röntgenaufnahme wird der Photoleiter durch eine zur Zylinderachse parallele Aufladeeinrichtung 9 auf Null Volt aufgeladen, so daß über der Photoleiterschicht eine Spannung von 1.500 V anliegt. Die Aufladung, die bei rotierendem Träger 7 erfolgt, wird unmittelbar vor einer Röntgenaufnahme unterbrochen. Bei der Röntgenaufnahme rotiert der Träger ebenfalls und wird in Richtung des Pfeiles 11 verschoben. Im Laufe einer Röntgenaufnahme wird nach und nach die gesamte Oberfläche des Photoleiters belichtet und je nach Intensität der Röntgenstrahlung an den verschiedenen Punkten mehr oder weniger entladen. Die Ladungsdichte an der Oberfläche bzw. das Oberflächenpotential, die ein Maß für die Intensität der Röntgenstrahlung darstellen, werden nach der Aufnahme - ebenfalls bei rotierender Trommel - mit einer Influenzsondenanordnung 10 abgetastet und in elektrische Signale umgesetzt. Diese zum Oberflächenpotential bzw. zur Entladung nach der Aufnahme proportionalen Signale werden mit nicht näher dargestellten Schaltungskomponenten verstärkt und in digitale Datenworte umgesetzt. Diese Datenworte stellen in digitaler Form eine Zahl dar, die das Oberflächenpotential bzw. die Entladung an der betreffenden Stelle des Photoleiters beschreibt und ein Maß für die Intensität der Röntgenstrahlung an dem betreffenden Bildpunkt ist. Sie wird daher im folgenden als Bildwert bezeichnet.

Im einzelnen ist eine solche Anordnung in der DE-OS 35 34 768 beschrieben. Anstelle eines Aufzeichnungsträgers mit zylindrischer oberfläche kann jedoch auch ein ebener Aufzeichnungsträger verwendet werden, der überall gleichzeitig belichtet wird, und dessen Oberflächenpotential mit einer mäanderförmigen Abtastbewegung erfaßt wird.

In Fig. 2 stellt die mit einer durchzogenen Linie dargestellte Kurve f(t) den zeitlichen Verlauf des Oberflächenpotentials bei einem Photoleiter dar, der z. Zeit t=0 einer Röntgenstrahlung ausgesetzt und gleichzeitig aufgeladen wurde. Ein Teil der durch die Röntgenbelichtung erzeugten Ladungsträger wird im Fotoleiter in Haftstellen (traps) eingefangen. Diese Ladungsträger werden zu einem späteren Zeitpunkt thermisch befreit. Sie driften unter dem Einfluß des in der Photoleiterschicht herrschenden elektrischen Feldes senkrecht zur Photoleiteroberfläche und bewirken eine Entladung. Diese Entladung ist unmittelbar im Anschluß an die Röntgenaufnahme relativ stark und klingt im Laufe von einigen Minuten ab.

Aus dem Vorstehenden wird deutlich, daß der Memory-Effekt nur eine Rolle spielen kann, solange die durch die vorangegangene Röntgenaufnahme ausgelöste Ladungsträgerbewegung noch nicht abgeklungen ist. Folgt die nächste Aufnahme aber erst in einem größeren zeitlichen Abstand, z.B. nach mehr als drei Minuten, dann macht sich der Memory-Effekt praktisch nicht mehr bemerkbar. Vergleicht man die durch den Memory-Effekt bewirkte Selbstentladung mit der durch die aktuelle Aufnahme bewirkten Entladung, dann zeigt sich, daß der Memory-Effekt vorwiegend in Direktstrahlungsbereichen der vorangegangenen Aufnahme wirksam ist und sich dort mit diagnostisch relevanten Bildbereichen der aktuellen Aufnahme überlappt. Wegen der im Vergleich zur Direktstrahlung geringen Dosis in diesen Bildbereichen bei der aktuellen Aufnahme kann hier der Memory-Effekt überwiegen. Die Direktstrahlungsbereiche der aktuellen Aufnahme sind von geringem diagnostischen Interesse, was die Korrektur bei Anwesenheit beider Effekte erleichtert. Wenn die Aufladung des Photoleiters nicht schon zur Zeit t=0 enden würde sondern erst zur Zeit t=$t_c$, dann hat dies praktisch keinen Einfluß auf die Ladungsträgerbewegung. Die Entladungskurve, die sich ergibt, wenn die Aufladung erst zur Zeit t=$t_c$ abgeschaltet wird (gestrichelt dargestellt), unterscheidet sich von der Kurve f(t) daher nur um einen konstanten Betrag.

Mißt man auf entsprechende Weise für eine größere oder kleinere Dosis den Verlauf des Oberflächenpotentials, dann ergeben sich zwar größere oder kleinere Werte, jedoch sind die Kurven bis auf einen konstanten Amplitudenfaktor gleich. Es gilt somit für den zeitlichen Verlauf des Oberflächenpotentials dB(x,y,t) bei der Selbstentladung

$$dB(x,y,t) = k(x,y)f(t) \quad (1)$$

Dabei ist f(t) der in Fig. 2 dargestellte Verlauf und k(x,y) der Amplitudenfaktor. Aus Gleichung (1) geht hervor, daß das Oberflächenpotential, eine Größe, die vom Ort x,y und von der Zeit abhängt, aus dem Produkt eines ortsabhängigen Faktors k(x,y) und eines zeitabhängigen Faktors f(t) berechnet werden kann.

Wie schon erläutert, ist der Amplitudenfaktor k von der Dosis abhängig, und zwar ist er umso größer, je größer die Dosis ist. Zumindest bei geringeren Dosen hängt der Faktor k linear mit der Dosis zusammen. Da die Dosis ihrerseits die Entladung des Photoleiters bestimmt, ergibt sich auch ein eindeutiger Zusammenhang, zwischen dem Bildwert B an einem Bildpunkt und dem Faktor k, der an diesen Bildpunkt die sich anschließende Selbstentladung gemäß Gleichung (1) beschreibt.

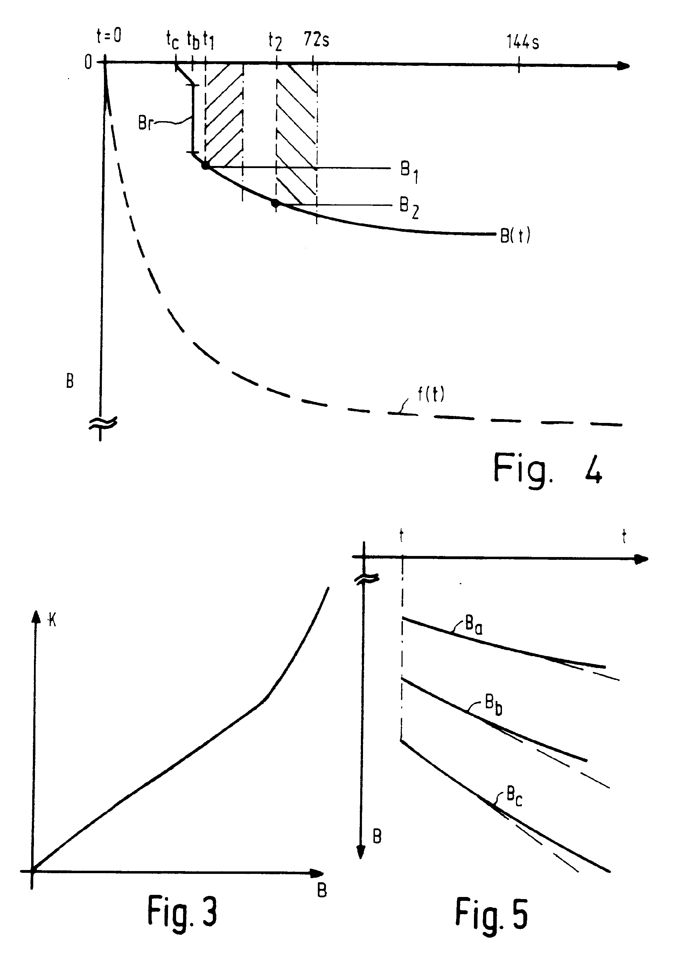

Dieser Zusammenhang ist in Fig. 3 dargestellt. Man erkennt, daß der Amplitudenfaktor k zunächst linear mit dem Bildwert B zunimmt und daß mit wachsendem B die Zunahme von k immer geringer wird. Die in Fig. 3 dargestellte Kurve kann etwa folgendermaßen gemessen werden:

Es wird zunächst für eine geeignet gewählte Dosis bzw. den zugehörigen Bildwert der zeitliche Verlauf der Selbstentladung gemessen. Dieser Verlauf wird als charakteristische Entladungsfunktion f(t) (Fig. 2) definiert. Dem betreffenden Bildwert B wird der Amplitudenfaktor k=1 zugeordnet. Danach wird die Dosis variiert, und erneut die nach der Bestrahlung einsetzende Änderung des Oberflächenpotentials gemessen. Wie schon erwähnt, unterscheidet sich der zeitliche Verlauf dieser Selbstentladung von der zuvor gemessenen Kurve f(t) nur durch einen konstanten Faktor, der sich aus einem Vergleich der Kurven bestimmen läßt. Dieser Faktor wird dem bei der Messung gegebenen Bildwert B zugeordnet. Dieses Verfahren wird für eine Anzahl von Bildwerten B wiederholt, so daß sich daraus die Kurve gemäß Fig. 3 ergibt.

Wenn der Zusammenhang zwischen B und K bekannt ist, läßt sich für jeden Bildpunkt die Selbstentladung dB berechnen nach der Gleichung

$$dB = k * (f(t_1) - f(t_c)) \quad (2)$$

Dabei wird davon ausgegangen, daß die vorangegangene Aufnahme zur Zeit t=0 endete, daß die Aufladung des Photoleiters vor der aktuellen Aufnahme zur Zeit t=$t_c$ beendet wurde und daß der betreffende Bildwert im aktuellen Bild zur Zeit t=$t_1$ erfaßt worden ist. Der Amplitudenfaktor k wird aus dem Bildwert bei der vorangegangenen Aufnahme (zur Zeit t=0) ermittelt. Der bei der aktuellen Aufnahme ermittelte Bildwert muß somit um dB verringert werden. Die Durchführung des Verfahrens mit einem Rechner setzt voraus, daß die Kurven gemäß den Figuren 2 und 3 bekannt und gespeichert sind. Da der für verschiedene Bildpunkte in der Regel unterschiedliche Amplitudenfaktor k nur von den zugehörigen Bildwerten bei der vorangegangenen Aufnahme abhängt, kann er bereits unmittelbar nach der vorangegangenen Aufnahme für jeden einzelnen Bildpunkt bestimmt werden. Hingegen liegen die Werte $t_1$ und $t_c$ erst nach der folgenden Aufnahme fest, so daß die Differenz in Gleichung (2) erst danach berechnet werden kann. Der Zeitpunkt $t_c$ bzw. f($t_c$) ist dabei für alle Bildpunkte konstant. Hingegen ist $t_1$ und damit f($t_1$) nicht für alle Bildpunkte gleich, weil das Oberflächenpotential an den verschiedenen Bildpunkten in der Regel zu unterschiedlichen Zeitpunkten erfaßt wird.

Die vorstehend erläuterte Korrektur des Memory-Effekts nutzt Bildwerte aus, die bei der vorangegangenen Aufnahme gewonnen wurden. Es ist jedoch auch möglich, die für die Korrektur erforderlichen Werte nur aus der aktuellen Aufnahme zu entnehmen, für die der durch die vorangegangene Aufnahme bewirkte Memory-Effekt kompensiert bzw. korrigiert werden soll. Tastet man den Photoleiter nämlich im Anschluß an eine Aufnahme zu zwei verschiedenen Zeitpunkten $t_1$ und $t_2$ ab, dann ergeben sich für diesen Bildpunkt zwei verschiedene Bildwerte $B_1$ und $B_2$. Der zu dem später liegenden Zeitpunkt $t_2$ erfaßte Bildwert $B_2$ ist dabei größer als $B_1$, weil die Selbstentladung zum Zeitpunkt $t_2$ stärker fortgeschritten ist als zum Zeitpunkt $t_1$. Je größer die Dosis an dem betreffenden Bildpunkt bei der vorangegangenen Aufnahme war, und je kürzer der zeitliche Abstand zu dieser Aufnahme ist, desto größer ist die Differenz zwischen $B_2$ und $B_1$. Somit läßt sich aus der Differenz von $B_2$ und $B_1$ die Stärke des Memory-Effektes ableiten und die Bildwerte können entsprechend korrigiert werden.

Zur Erläuterung dieses Gedankens wird nachfolgend auf Fig. 4 bezug genommen.

Fig. 4 zeigt den zeitlichen Verlauf des Oberflächenpotentials eines Bildpunktes bei einer Röntgenaufnahme, wobei vorausgesetzt ist, daß die vorangegangene Aufnahme zur Zeit t=0 stattgefunden hat. Die zugehörige Entladungsfunktion f(t) ist in Fig. 4 gestrichelt angedeutet. Es ist angenommen, daß nach dieser vorangehenden Aufnahme die Oberfläche des Photoleiters zunächst aufgeladen wird und bis zum Zeitpunkt t=$t_c$ aufgeladen bleibt. Die dann einsetzende Selbstentladung kann den gleichen Verlauf haben wie die charakteristische Entladungskurve f(t) vom Zeitpunkt $t_c$ an; sie kann jedoch auch stärker oder schwächer ausgeprägt sein, je nach der Dosis, von der der zugehörige Bildpunkt bei der vorangegangenen Aufnahme getroffen wurde.

Zur Zeit t=$t_b$ wird der Bildpunkt erneut mit Röntgenstrahlung belichtet. Während der Röntgenaufnahme entlädt sich die Oberfläche des Photoleiters um

den Betrag $B_r$. Dieser Betrag, der - ebenso wie die Selbstentladung - von Bildpunkt zu Bildpunkt variieren kann, enthält die eigentliche Bildinformation.

Nach der Röntgenaufnahme setzt sich die Selbstentladung des Photoleiters fort, und zur Zeit $t=t_1$ wird die Photoleiteroberfläche abgetastet. Der sich dabei für den Bildpunkt ergebende Bildwert ist mit $B_1$ bezeichnet. Die Ladungsverteilung an der Oberfläche des Photoleiters kann nicht überall gleichzeitig abgetastet werden, jedoch innerhalb einiger Sekunden, wie durch den schraffierten Streifen angedeutet. Die Ladungsverteilung wird durch das Abtasten bzw. Auslesen nicht verändert; sie ändert sich lediglich infolge des geschilderten Selbstentladungsprozesses.

Zur Zeit $t=t_2$ beginnt ein erneuter Abtastvorgang der Photoleiteroberfläche. Der dabei gewonnene Bildwert ist mit $B_2$ bezeichnet. Wegen der zwischenzeitlich fortgeschrittenen Selbstentladung ist er größer als $B_1$.

Für die Selbstentladung zum Zeitpunkt $t_1$ gilt:

$$dB_1 = k * f(t_1) + C \quad (3)$$

Dabei ist C eine Konstante, die dem Produkt aus dem Faktor k und der charakteristischen Entladungsfunktion zur Zeit $t=t_c$ entspricht. Analog ergibt sich für die Selbstentladung $dB_2$ zum Zeitpunkt $t_2$

$$dB_2 = k * f(t_2) + C \quad (4)$$

Die Differenz der beiden Bildwerte eines Bildpunkte ist, wie bereits erwähnt, ausschließlich auf die Selbstentladung des Photoleiters an diesem Bildpunkt zurückzuführen. Damit und unter Berücksichtigung der Gleichungen (3) und (4) gilt:

$$B_1 - B_2 = dB_1 - dB_2 = k * (f(t_1) - f(t_2)) \quad (5)$$

Diese Gleichung läßt sich nach k auflösen, so daß sich ergibt:

$$k = (B_1 - B_2)/(f(t_1) - f(t_2)) \quad (6)$$

Setzt man diesen Wert von k in Gleichung (2) ein, dann ergibt sich für die Selbstentladung dB bis zum Abtastzeitpunkt $t_1$

$$dB = (B_1 - B_2) * (f(t_1) - f(t_c))/(f(t_1) - f(t_2)) \quad (7)$$

Die Werte $B_1$ und $B_2$ ergeben sich durch das zweimalige Abtasten. Die charakteristische Entladungsfunktion f(t) ist von vornherein bekannt, und die Zeitpunkte $t_c$, $t_1$ und $t_2$ ergeben sich durch Messung des zeitlichen Abstandes zwischen der voraufgegangenen Aufnahme und dem Ende der Aufladung bzw. den Abtastzeitpunkten $t_1$ und $t_2$.

Bei einem Röntgengerät vollzieht sich der zeitliche Ablauf einer Röntgenaufnahme immer nach dem gleichen zeitlichen Schema. Wenn also zur Vorbereitung der Röntgenaufnahme die Aufladung abgeschaltet wird und somit der Zeitpunkt $t=t_c$ festgelegt ist, liegen auch die Zeitpunkte $t_1$ und $t_2$ fest, weil die Abtastung eines bestimmten Bildpunktes immer im gleichen zeitlichen Abstand zur Einleitung der Röntgenaufnahme erfolgt. Somit stehen die Werte $t_1$ und $t_2$ bzw. $f(t_1)$ und $f(t_2)$ für jeden Bildpunkt schon vor den Zeitpunkten $t_1$ bzw. $t_2$ fest und können zur Berechnung von dB herangezogen werden. Der so berechnete Wert dB muß dann lediglich von dem Bildwert $B_1$ subtrahiert werden.

Vorstehend wurde davon ausgegangen, daß die Selbstentladung ausschließlich durch den Memory-Effekt bedingt ist, d.h. daß sie dadurch hervorgerufen wird, daß die Oberfläche an einigen Stellen bei der (zur Zeit t=0) vorangegangenen Aufnahme von besonders starker Strahlung (Direktstrahlung) getroffen worden ist und sich daher besonders schnell entlädt. Neben dieser Ursache liegt eine weitere Ursache für die Selbstentladung in der bei der aktuellen Röntgenaufnahme ($t=t_b$) empfangenen Strahlungsdosis. Diese Strahlungsdosis ist bei einer korrekten Belichtung vergleichsweise gering - jedenfalls in den für die Diagnose wichtigen Bereichen, so daß die dadurch bedingten Artefakte nicht das Ausmaß annehmen, das sie als Folge des Memory-Effekts erreichen können. Jedoch folgt die Selbstentladung der gleichen Gesetzmäßigkeit, die - für den Memory-Effekt - in Verbindung mit Fig. 2 und Gleichung 1 erläutert wurde. Der einzige Unterschied besteht darin, daß der Amplitudenfaktor wesentlich kleiner ist und daß der Zeitraum zwischen der Aufnahme und dem Abtastzeitpunkt kürzer ist als der Zeitraum zwischen der vorangegangenen Aufnahme und diesem Zeitpunkt.

Deswegen ist es nicht erforderlich, zur Korrektur dieser Komponente der Selbstentladung das anhand der Gleichung (2) bis (7) durchgeführte Verfahren durchzuführen. Es genügt vielmehr eine Korrektur, bei der von einer zeitlich linearen Änderung des Oberflächenpotentials ausgegangen wird. so daß die Größe unmittelbar aus der Bildamplitude ermittelt werden kann. Hierzu wird auf Fig. 5 verwiesen, die den zeitlichen Verlauf des Oberflächenpotentials für drei verschiedene Bildpunkte bezeichnet, die zur Zeit $t=t_b$ von unterschiedlich starker Röntgenstrahlung getroffen werden. Die zugehörigen Selbstentladungskurven sind mit $B_a$ $B_b$, und $B_c$ bezeichnet. Man erkennt daraus folgendes:

Die Entladungskurven lassen sich durch Geraden ersetzen, die in Fig. 5 gestrichelt angedeutet sind. Die Steigungen dieser Geraden sind proportional zu dem Bildwert, der sich am Ende der Aufnahme ($t=t_b$) einstellte. Somit gilt für die Entladung dB eines Bildpunktes zur Zeit t

$$dB = B * c_1 * (t - t_b) \quad (8)$$

Dabei ist B der Bildwert, der zur Zeit t gemessen wurde und $c_1$ eine Materialkonstante. Der gemessene Bildwert B muß um den so bestimmten Betrag dB verringert werden. Diese Korrektur ist nicht nur zur Verbesserung der Korrektur des Memory-Effektes erforderlich, sondern kann davon unabhängig mit Vorteil auch bei Röntgenaufnahmen eingesetzt werden, beid denen der Memory-Effekt keine Rolle spielt (z.B. weil der zeitliche Abstand zur vorangegangenen Röntgenaufnahme genügend groß ist).

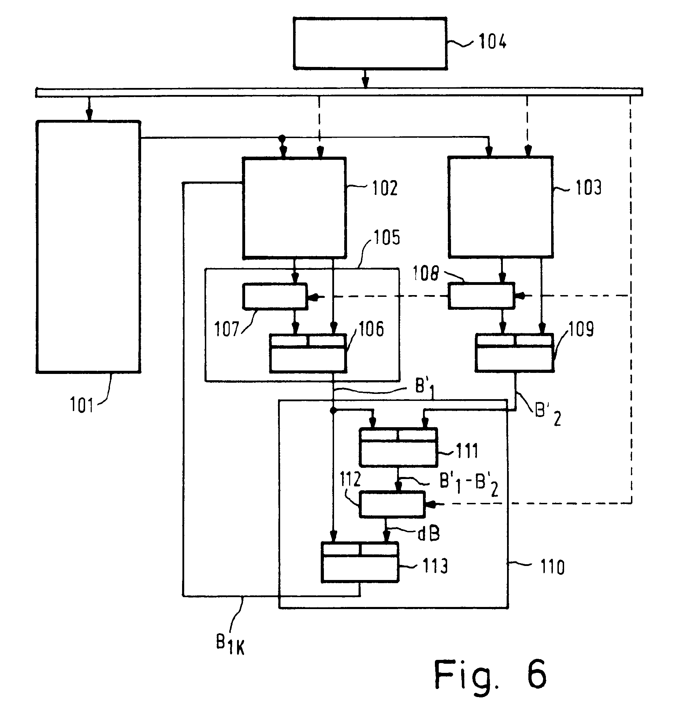

In Fig. 6 ist das Blockschaltbild einer Bildverarbeitungseinheit dargestellt, mit der die zuvor erläuterten Korrekturen durchgeführt werden können. Die Einheit 101 verstärkt die von den Sonden 10 (Fig. 1) gelieferten elektrischen Signale und setzt sie in digitale Bildwerte um. Die Einheit 101 liefert somit eine Folge von Bildwerten. Bei der ersten Abtastung werden diese Bildwerte einem Speicher 102 zugeführt und bei der zweiten Abtastung einem Bildspeicher 103. Jeder der Speicher enthält somit die vollständige Röntgenaufnahme - allerdings durch die geschilderten Selbstentladungseffekte artefaktbehaftet. Die Komponenten 101, 102, 103 und alle weiteren Komponenten der Bildverarbeitungseinheit werden von einem Kontrollprozessor 104 gesteuert. Dieser Kontrollprozessor registriert den Zeitpunkt einer jeden Röntgenaufnahme und bestimmt den Zeitraum, der zwischen der voraufgegangenen Aufnahme bis zu dem Zeitpunkt $t_c$ verstreicht, zu dem zur Vorbereitung der aktuellen Aufnahme die Aufladung des Photoleiters abgeschaltet wird. Der Kontrollprozessor 104 enthält darüberhinaus in einem Speicher die charakteristische Entladungsfunktion $f(t)$ und kann somit diese Größe zu den verschiedenen Zeitpunkten bzw. daraus abgeleitete Werte erzeugen.

Die in Verbindung mit Gleichung (8) erläutert Korrektur der Selbstentladung, wird in einer Einheit durchgeführt, die einen Addierer bzw. Subtrahierer 106 umfaßt, dem der jeweilige Bildwert einerseits direkt und andererseits über eine Einheit 107 zugeführt wird, die das Produkt gemäß Gleichung (8) bildet. Diese Einheit kann entweder ein Multiplizierer sein, der den Bildwert mit dem Faktor $c_1(t-t_b)$ multipliziert, aber auch ein Tabellenspeicher (look-up-table), in den vom Kontrollprozessor 104 ein Datensatz eingelesen wird, der so beschaffen ist, daß bei Vorgabe des Bildwertes B am Eingang der Einheit 107 an derem Ausgang das Produkt gemäß der Gleichung (8) erscheint. Dies ist der Wert dB der durch die aktuelle Aufnahme induzierten Selbstentladung bis zum Zeitpunkt t. Am Ausgang der Einheit 106 ergibt sich somit ein Bildwert, der von der aktuellen Aufnahme unabhängig ist. Dieser Bildwert wird mit $B_1'$ bezeichnet.

Analog zu dieser Vorkorrektur der beim ersten Abtastvorgang entstandenen Bildwerte werden die Bildwerte, die beim zweiten Abtastvorgang (zum Zeitpunkt $t_2$ bzw. später) entstanden und im Speicher 103 gespeichert sind, vorkorrigiert. Diesem Zweck dient eine Einheit 108, die ein Produkt gemäß Gleichung 108 erzeugt, sowie der Addierer bzw. Subtrahierer 109, an dessen Ausgang somit ein Signal entsteht, das dem - von dem durch die aktuelle Aufnahme induzierten Selbstentladungseffekt befreiten Bildwert $B_2'$ bei der zweiten Abtastung entspricht. Der Kontrollprozessor 104 steuert die Auslesung der Bildwerte aus den Speichern 102 und 103 so, daß jeweils die Bildwerte ausgelesen werden, die dem gleichen Bildpunkt zugeordnet sind.

Die auf diese Weise vorkorrigierten Bildwerte $B_1'$ und $B_2'$ werden einer Einheit 110 zugeführt, in der die durch den Memory-Effekt bewirkte Entladung korrigiert wird. Sie enthält zu diesem Zweck einen Subtrahierer 111, der die Differenz zwischen $B_1'$ und $B_2'$ bildet und dessen Ausgang mit dem Eingang einer Einheit 112 verbunden ist, deren Ausgangssignal dem Produkt aus dem erwähnten Eingangssignal und dem Faktor

$$(f(t_1) - f(t_c))/(f(t_1) - f(t_2))$$

entspricht. Die Einheit 112 kann somit wiederum ein Multiplizierer sein oder ein Tabellenspeicher, in dem für jeden Eingangswert $(B_1'-B_2')$ das zugehörige Produkt gespeichert ist. Der Digitalwert am Ausgang der Einheit 112 entspricht somit dem Wert dB gemäß Gleichung (7), d.h. er stellt die Selbstentladung dar, die durch den Memory-Effekt bis zum Zeitpunkt $t_1$ entstanden ist. Dieser Wert wird von dem vorkorrigierten Bildwert $B_1'$ in einem Subtrahierer 113 subtrahiert. Das Ausgangssignal $B_{1k}$ stellt somit den von durch die vorangegangene und durch die aktuelle Aufnahme induzierten Selbstentladungseffekten befreiten Bildwert dar; es entspricht also dem nur durch die Bildinformation bestimmten Wert $B_r$. Das Signal $B_{1k}$ wird in dem Speicher 102 auf dem Speicherplatz gespeichert, dem zuvor der Bildwert $B_1$ entnommen wurde.

Auf diese Weise wird die im Speicher 102 enthaltene Aufnahme, die zunächst wegen der Selbstentladungseffekte artefaktbehaftet ist, Bildpunkt für Bildpunkt korrigiert. Da die weiteren Bildwerte in der Regel nicht zur Zeit $t_1$, $t_2$ sondern zu anderen Zeitpunkten gewonnen wurden, müssen die Faktoren, mit denen in den Einheiten 107, 108 und 112 multipliziert wird, fortlaufend angepaßt werden (der Parameter t in Gleichung (8), die mittels der Komponenten 106..109 durchgeführt wird, entspricht den Abtastzeitpunkten, zu denen ein bestimmter Bildpunkt abgetastet wird, so daß der Faktor für die Einheiten 107 und 108 ebenfalls geändert werden muß). Da benachbarte Bildpunkte auf dem Photoleiter in äußerst kurzen zeitlichen Abständen abgetastet werden können, genügt es, wenn den Bildpunkten, die innerhalb eines Zeitraums abgetastet werden, innerhalb dessen die Selbstentladung vernachlässigbar klein ist (z.B. 0,1 sec.), der gleiche Abtastpunkt zugeordnet wird. So kann bei der Anordnung nach Fig. 1 beispielsweise allen Bildpunkten, deren Ladungsdichte von der Influenzsondenanordnung 11 innerhalb einer Umdrehung des Trägers 7 abgetastet wird, der gleiche Abtastzeitpunkt zugeordnet werden. Dadurch wird die Güte der Korrektur der Selbstentladungseffekte nicht wesentlich beeinflußt, jedoch wird der Rechenaufwand für den Kontrollprozessor 104, der die von der Zeit bzw. von der charakteristischen Entladungsfunktion $f(t)$ abhängigen Faktoren jeweils neu berechnen muß, wesentlich verringert.

# Patentansprüche

1. Verfahren zum Erzeugen einer Röntgenaufnahme mittels eines Röntgenstrahlung in ein Ladungsmuster umsetzenden Photoleiters, der vor der Röntgenaufnahme örtlich gleichmäßig aufgeladen, der durch die Aufnahme in Abhängigkeit von der Intensität der Röntgenstrahlung entladen wird und dessen Oberfläche nach der Aufnahme zur Erfassung der Ladungsdichte abgetastet wird, wobei für jeden Bildpunkt ein der Entladung an dem Bildpunkt entsprechender Bildwert gebildet wird,
dadurch gekennzeichnet, daß aus der seit der vorangegangenen Aufnahme bis zum Ende der Aufladung bzw. bis zum Auslesen verstrichenen Zeit, aus der charakteristischen Entladungsfunktion (f(t)) des Photoleiters und aus einem von der Dosis an dem betreffenden Bildpunkt bei der vorangehenden Aufnahme abhängigen Korrekturfaktor (k) die Selbstentladung (dB) in jedem Bildpunkt bestimmt und der zugehörige Bildwert ($B_1$) entsprechend korrigiert wird.

2. Verfahren nach Anspruch 1,
dadurch gekennzeichnet, daß der Korrekturfaktor (k) aus den Bildwerten der vorangegangenen Aufnahmen abgeleitet wird.

3. Verfahren nach Anspruch 1,
dadurch gekennzeichnet, daß das durch eine Röntgenaufnahme erzeugte Entladungsbild zweimal abgetastet wird und daß der Korrekturfaktor aus der Differenz ($B_1$-$B_2$) der Bildwerte, bezogen auf die Differenz der charakteristischen ($t_1$,$t_2$) Entladungsfunktion f(t) an den beiden Abtastzeitpunkten bestimmt wird.

4. Verfahren zum Erzeugen einer Röntgenaufnahme mittels eines Röntgenstrahlung in ein Ladungsmuster umsetzenden Photoleiters, der vor der Röntgenaufnahme örtlich gleichmäßig aufgeladen, der durch die Aufnahme in Abhängigkeit von der Intensität der Röntgenstrahlung entladen wird und dessen Oberfläche nach der Aufnahme zur Erfassung der Ladungsdichte abgetastet wird, wobei für jeden Bildpunkt ein der Entladung an dem Bildpunkt entsprechender Bildwert gebildet wird, insbesondere nach einem der Ansprüche 1 bis 3,
dadurch gekennzeichnet, daß zur Korrektur der durch die jeweilige Aufnahme bewirkten Entladung die Bildwerte ($B_1$) um einen Betrag (dB) verringert werden, der den Bildwerten und der Zeitdifferenz ($t-t_b$) zwischen dem Abtastzeitpunkt und einem Referenzzeitpunkt, vorzugsweise dem Zeitpunkt ($t_b$) der Aufnahme, proportional ist.

5. Anordnung zur Durchführung des Verfahrens nach Anspruch 1 mit einem Röntgenstrahler, einem auf einen leitenden Träger aufgebrachten Photoleiter, einer Aufladeeinrichtung zum Aufladen des Photoleiters, einer Elektrometeranordnung zur Erfassung der Ladungsdichte an einzelnen Punkten des Photoleiters und einer Speicheranordnung zum Speichern der zur Ladungsdichte proportionalen Bildwerte,
dadurch gekennzeichnet, daß die Speicheranordnung (102,103) so ausgelegt ist, daß sie die Bildwerte zweier Röntgenaufnahmen speichern kann, daß ein Speicher (104) für die charakteristische Entladungsfunktion bzw. daraus abgeleitete Werte, vorgesehen ist, daß Mittel (104) zum Bestimmen der nach dem Aufnahmeende erfolgten Selbstentladung des Photoleiters an den verschiedenen Bildpunkten aus den in der Speicheranordnung enthaltenen Werten vorgesehen sind und Mittel (105..113) zum Korrigieren der Bildwerte eines Bildes entsprechend dieser Berechnung.

6. Anordnung zur Durchführung des Verfahrens nach Anspruch 4, mit einem Röntgenstrahler, einem auf einen leitenden Träger aufgebrachten Photoleiter, einer Aufladeeinrichtung zum Aufladen des Photoleiters, einer Elektrometeranordnung zur Erfassung der Ladungsdichte an einzelnen Punkten des Photoleiters und einer Speicheranordnung zum Speichern der zur Ladungsdichte proportionalen Bildwerte,
dadurch gekennzeichnet, daß Mittel (107,108) zum Multiplizieren der Bildwerte mit einem der Zeitdifferenz zwischen dem Abtasten des zugehörigen Bildpunktes und dem Referenzzeitpunkt proportionalen Faktor vorgesehen sind und Mittel zur Subtraktion des so erzeugten Produktes von dem zugehörigen Bildwert.

# Claims

1. A method of generating an X-ray exposure by means of a photoconductor which converts X-rays into a charge pattern and which is locally uniformly charged before the X-ray exposure, is discharged by the exposure as a function of the intensity of the X-rays, the surface of which is scanned after the exposure in order to detect the charge density for each image point, an image value is formed which corresponds to the discharge at said image point, characterized in that the self-discharge (dB) is determined at each image point from the time elapsed since the preceding exposure up to the end of charging or until reading-out, from the characteristic discharge function (f(t)) of the photoconductor, and from a correction factor (k) dependent on the dose at the relevant image point during the preceding exposure, the associated image value (B1) being corrected accordingly.

2. A method as claimed in Claim 1, <u>characterized in that</u> the correction factor (k) is derived from the image values of the preceding exposures.

3. A method as claimed in Claim 1, <u>characterized in that</u> the discharge image produced by an X-ray exposure is scanned twice and in that the correction factor is determined from the difference (B1-B2) between the image values, referred to the difference between the characteristic (t1, t2) discharge function f(t) at the two scanning instants.

4. A method of generating an X-ray exposure by means of a photoconductor which converts X-rays into a charge pattern, is locally uniformly charged before the X-ray exposure, is discharged by the exposure as a function of the intensity of the X-rays and the surface of which is scanned after the exposure in order to detect the charge density for each image point, an image value being formed which corresponds to the discharge at the image point, in particular as claimed in one of the Claims 1 to 3, <u>characterized in that</u> the image values (B1) are reduced by an amount (dB) which is proportional to the image values and the time difference (t-tb) between the scanning instant and a reference instant, preferably the instant (tb) of the exposure, in order to correct the discharge brought about by the relevant exposure.

5. An arrangement for carrying out the method claimed in Claim 1, comprising an X-ray source, a photoconductor provided on a conducting carrier, a charging means for charging the photoconductor, an electrometer arrangement for detecting the charge density at individual points of the photoconductor, and a storage arrangement for storing the image values proportional to the charge density, <u>characterized in that</u> the storing arrangement (102, 103) is designed so that it can store the image values of two X-ray exposures, in that there is provided a memory (104) for the characteristic discharge function or values derived therefrom, in that there are provided means (104) for determining the self-discharge of the photoconductor, taking place after the end of exposure at the various image points from the values confined in the storage arrangement, and also means (105.. 113) for correcting the image values of an image according to this calculation.

6. An arrangement for carrying out the method claimed in Claim 4, comprising an X-ray source, a photoconductor provided on a conducting carrier, a charging means for charging the photoconductor, an electrometer arrangement for detecting the charge density at individual points of the photoconductor, and a storage arrangement for storing the image values proportional to the charge density, <u>characterized in that</u> there are provided means (107, 108) for multiplying the image values by a factor proportional to the time difference between the scanning of the associated image point and the reference instant, and means for subtracting the product thus produced from the associated image value.

## Revendications

1. Procédé de production d'une image radiographique à l'aide d'un photoconducteur qui convertit un rayonnement X en un motif de charge, est chargé localement de manière uniforme avant la prise de vue radiographique, est déchargé en fonction de l'intensité du rayonnement X lors de la prise de vue et dont la surface est analysée après la prise de vue pour détecter la densité de charge, étant entendu que pour chaque point d'image est formée une valeur d'image correspondant à la décharge au point d'image, caractérisé en ce qu'à partir du temps qui s'est écoulé entre la prise de vue précédente et la fin de la charge ou la lecture à partir de la fonction de décharge caractéristique (f(t)) du photoconducteur et à partir d'un facteur de correction (k) dépendant de la dose au point d'image en question, lors de la prise de vue précédente, on détermine la décharge spontanée (dB) dans chaque point d'image et on corrige en conséquence la valeur d'image associée ($B_1$).

2. Procédé suivant la revendication 1, caractérisé en ce que le facteur de correction (k) est dérivé des valeurs d'image des prises de vue précédentes.

3. Procédé suivant la revendication 1, caractérisé en ce que l'image de décharge produite par une prise de vue radiographique est analysée à deux reprises et que le facteur de correction est déterminé à partir de la différence ($B_1$-$B_2$) entre les valeurs d'image sur base de la différence que présente la fonction de décharge f(t) caractéristique ($t_1$, $t_2$) aux deux instants d'analyse.

4. Procédé de production d'une image radiographique à l'aide d'un photoconducteur qui convertit un rayonnement X en un motif de charge, est chargé localement de manière uniforme avant la prise de vue radiographique, est déchargé en fonction de l'intensité du rayonnement X lors de la prise de vue et dont la surface est analysée après la prise de vue pour détecter la densité de charge, étant entendu que, pour chaque point d'image est formée une valeur d'image correspondant à la décharge au point d'image, en particulier suivant l'une quelconque des revendications 1 à 3, caractérisé en ce que pour la correction de la décharge induite par la prise de vue en question, les valeurs d'image ($B_1$) sont diminuées d'une valeur absolue (dB) qui est proportionnelle aux valeurs d'image et à la différence de temps ($t-t_b$) entre l'instant d'analyse et un instant de référence qui est de préférence l'instant ($t_b$) de la prise de vue.

5. Dispositif pour l'exécution du procédé suivant la revendication 1 comportant un générateur de rayons X, un photoconducteur monté sur un support conducteur, un dispositif de charge pour la charge du photoconducteur, un dispositif électrométrique pour détecter la densité de charge en des points individuels du photoconducteur et un dispositif de stockage pour stocker les valeurs d'image proportionnelles à la densité de charge, caractérisé en ce que le dispositif de stockage (102, 103) est conçu de façon qu'il puisse stocker les valeurs d'image de deux prises de vue radiographiques, une mémoire (104) est prévue pour la fonction de décharge caractéristique ou les valeurs qui en sont dérivées, des moyens (104) sont prévus pour déterminer la décharge spontanée du photoconducteur aux divers points d'image, se produisant après la fin de la prise de vue, à partir des valeurs contenues dans le dispositif de stockage ainsi que des moyens (105.. 113) pour corriger les valeurs d'image d'une image correspondant à ce calcul.

6. Dispositif pour l'exécution du procédé suivant la revendication 4 comportant un générateur de rayons X, un photoconducteur monté sur un support conducteur, un dispositif de charge pour la charge du photoconducteur, un dispositif électrométrique pour détecter la densité de charge en des points individuels du photoconducteur et un dispositif de stockage pour stocker les valeurs d'image proportionnelles à la densité de charge, caractérisé en ce que des moyens (107, 108) sont prévus pour multiplier les valeurs d'image par un facteur proportionnel à la différence de temps entre l'analyse du point d'image associé et l'instant de référence ainsi que des moyens pour soustraire le produit ainsi obtenu de la valeur d'image associée.

Fig. 1

Fig. 2

Fig. 4

Fig. 3

Fig. 5

Fig. 6